# FASCICULE DE BREVET EUROPEEN

(11) **EP 1 323 570 B1**
(45) Date de publication et mention de la délivrance du brevet: **08.06.2005**
(21) Numéro de dépôt: 02292862.6
(22) Date de dépôt: 18.11.2002
(51) Int. Cl.: B60K 31/00, G01S 17/93, G01S 7/481, G01S 17/02

(54) **Dispositif d'aide à la conduite pour véhicule automobile**
Hilfsvorrichtung zur Steuerung eines Kraftfahrzeuges
Drive aid device for a motor vehicle

(30) Priorité: 20.12.2001 FR 0116505
(43) Date de publication de la demande: 02.07.2003
(73) Titulaire: VALEO VISION, 93012 Bobigny Cédex (FR)
(72) Inventeur: Dubrovin, Alexis, 94270 Le Kremlin Bicetre (FR)

(56) Documents cités:
- EP-A- 1 034 963
- DE-A- 10 018 556
- US-A- 5 266 955
- US-B1- 6 294 986

## Description

L'invention est relative à un dispositif d'aide à la conduite, en particulier optimisé par synergie avec un éclairage adaptatif, pour véhicule automobile, permettant à un véhicule suiveur de se maintenir à distance d'un véhicule suivi, ou véhicule cible, en libérant le conducteur de toute intervention au niveau de la pédale d'accélérateur et de la pédale de frein.

Un tel dispositif, généralement désigné par le sigle ACC (Automatic Cruise Control / Commande Automatique de Croisière) est propre à agir automatiquement sur l'accélération et le freinage du véhicule suiveur pour adapter sa vitesse à celle du véhicule cible. Un tel dispositif est connu par exemple du document DE 10 018 556 A, qui divulgue toutes les caractéristiques du préambule de la revendication 1.

Le dispositif d'aide à la conduite comprend au moins un émetteur de rayonnement vers l'avant du véhicule, au moins un récepteur d'une partie de ce rayonnement réfléchi par le véhicule cible, et des moyens de calcul et de commande pour agir sur l'accélération et le freinage du véhicule suiveur selon les informations provenant de l'ensemble émetteur- récepteur et selon diverses autres données propres au véhicule suiveur (vitesse, etc...).

Au moment de l'activation du dispositif d'aide à la conduite, le conducteur du véhicule suiveur est invité à spécifier une vitesse de référence (à laquelle le véhicule reviendra automatiquement si le mode ACC n'a plus lieu d'être), et un "temps de vol" de référence. Ce "temps de vol" correspond au temps nécessaire, à un moment donné, au véhicule suiveur pour atteindre la position du véhicule cible qui se trouve devant lui. Ce temps de vol est communément compris entre 1 seconde et 2 secondes. La fixation de ce temps de vol détermine, à une vitesse donnée, la distance qui doit être respectée entre le véhicule suiveur et le véhicule cible.

L'ensemble émetteur-récepteur du véhicule est généralement du type radar ou lidar. Le lidar comprend un émetteur à rayonnement infra rouge avec sonde optique comme récepteur.

Lorsque le dispositif d'aide ACC est activé, il recherche si un véhicule susceptible d'être suivi existe, dans l'axe du véhicule suiveur, à une distance comprise dans une certaine fourchette, selon un angle de détection donné, et avec un différentiel de vitesse raisonnable. Lorsque ces conditions sont satisfaites, le dispositif d'aide à la conduite signale sur le tableau de bord du véhicule suiveur qu'un véhicule cible potentiel existe et le conducteur peut alors décider de "s'attacher" à celui-ci en agissant sur un levier spécifique. A partir de ce moment, lorsque le véhicule cible accélère ou décélère, le véhicule suiveur fait de même de manière automatique. De multiples sécurités existent.

Il se peut que le véhicule suiveur perde la trace du véhicule cible ce qui correspond généralement à un mode de fonctionnement normal : par exemple le véhicule cible a changé de voie, ou a quitté la route à une bifurcation, ou bien le véhicule suiveur a lui-même changé de voie. Dans ce cas, le dispositif d'aide fait retourner progressivement le véhicule suiveur à sa vitesse de référence.

Mais il peut arriver aussi que le véhicule suiveur perde la trace du véhicule cible dans un virage plus ou moins prononcé, ou par suite d'une confusion avec d'autres véhicules latéraux, alors que le véhicule cible se trouve toujours devant sur la trajectoire du véhicule suiveur. Le véhicule suiveur va alors retourner à sa vitesse de référence qui, en général, est plus élevée que la vitesse du moment, car dans un virage on a tendance à ralentir. Le véhicule suiveur va donc se rapprocher rapidement de l'ex-véhicule cible sans "le voir", ce qui génère un risque pour le conducteur.

Différentes solutions ont été proposées: par exemple plusieurs faisceaux, ou faisceaux vibrants pour un balayage dynamique de l'émetteur, mais ces méthodes sont généralement chères pour être efficaces, ou peu efficaces lorsqu'elles sont bon marché.

Le document US-A-5 266 955, illustrant l'arrière plan technologique en général, divulgue un dispositif du type télémètre à radar laser pour mesurer la distance séparant un véhicule du véhicule qui le précède, quel que soit le tracé de la route sur laquelle circulent ces véhicules. A cet effet, l'émetteur/récepteur laser du véhicule suiveur est monté sur une plateforme dont l'orientation est fonction de l'angle du volant du véhicule.

L'invention a pour but, surtout, de fournir un dispositif d'aide à la conduite du type défini précédemment qui ne présente plus ou à un degré moindre les inconvénients mentionnés ci-dessus et qui reste d'un prix de revient acceptable.

Selon l'invention, un dispositif d'aide à la conduite pour véhicule automobile comprend au moins un émetteur (14) de rayonnement vers l'avant du véhicule, au moins un récepteur (16) d'une partie de ce rayonnement réfléchi par un véhicule cible (B), et des moyens de calcul et de commande (10) pour agir sur l'accélération et le freinage du véhicule suiveur (A) selon les informations provenant de l'ensemble émetteur (14) - récepteur (16) et selon des données propres au véhicule suiveur, et est caractérisé par le fait qu'au moins l'émetteur (14) est monté rotatif en azimut et que des moyens d'entraînement en rotation (8,9; 8b,9b) de l'émetteur (14) sont prévus pour modifier l'azimut (α) du faisceau (F) de l'émetteur selon la courbure de la route à partir des informations recueillies par un ensemble de commande (10) d'un système d'optimisation de l'éclairage équipant le véhicule suiveur et comportant des moyens propres à fournir des informations sur la courbure de la route.

De préférence, le récepteur est monté rotatif avec l'émetteur.

Le dispositif d'aide à la conduite peut être intégré dans un projecteur lumineux.

L'invention fait alors bénéficier le dispositif d'aide à la conduite ACC des fonctionnalités du système d'optimisation de l'éclairage. Le dispositif d'aide à la conduite n'a plus besoin de motorisation angulaire coûteuse et/ou d'interprétation supplémentaire de données.

L'intégration du dispositif d'aide à la conduite ACC dans un projecteur lumineux lui fait bénéficier des protections contre la pluie et la saleté, ainsi que d'une éventuelle correction d'assiette qui permet une simplification de la scrutation verticale des cibles.

Lorsque le projecteur lumineux comprend un projecteur rotatif monté sur une platine rotative en azimut autour d'un axe essentiellement vertical pour assurer une optimisation de l'éclairage, de préférence le dispositif d'aide à la conduite comprend un émetteur monté sur la même platine rotative que le projeteur.

Le projecteur rotatif peut être un projecteur additionnel, en particulier installé dans le bouclier du véhicule, et au moins l'émetteur du dispositif d'aide est monté sur la platine rotative du projecteur additionnel.

En variante, l'émetteur peut être monté sur une platine auxiliaire différente rotative en azimut autour d'un axe vertical, la commande en rotation de cette platine étant assurée par l'ensemble de commande de la platine du projecteur. La platine auxiliaire peut être disposée dans le même boîtier que la platine du projecteur ; un mécanisme de transmission de la rotation de la platine du projecteur à la platine auxiliaire peut être prévu.

Selon une autre possibilité, la platine auxiliaire est disposée dans un boîtier différent de celui abritant la platine du projecteur .

Un dispositif d'entraînement en rotation de la platine auxiliaire est commandé par l'ensemble de commande de la platine du projecteur .

Le projecteur peut comprendre un projecteur additionnel fixe pré-tourné dont l'intensité lumineuse est commandée selon la courbure de la route; l'émetteur est alors monté sur une platine auxiliaire rotative en azimut autour d'un axe vertical , le dispositif d'entraînement en rotation de cette platine étant commandé par l'ensemble de commande de l'intensité lumineuse du projecteur additionnel .

Le récepteur est de préférence monté sur la même platine rotative que l'émetteur.

En variante, le récepteur est monté fixe dans un boîtier situé à l'avant du véhicule, de préférence dans la région médiane. Un émetteur est monté dans chaque projecteur droite et gauche sur la platine rotative correspondante.

Lorsque le véhicule est équipé d'un système d'optimisation de l'éclairage commandant la rotation dans le plan horizontal des projecteurs aussi bien vers l'intérieur d'un virage que vers l'extérieur, un seul émetteur peut être prévu pour le dispositif d'aide , cet émetteur étant monté indifféremment sur la platine du projecteur droite ou du projecteur gauche .

Dans le cas d'un système d'optimisation de l'éclairage où chacun des projecteurs peut tourner vers l'extérieur pour assurer une fonction BL, chacun des projecteurs est équipé d'un dispositif d'aide et l'ensemble est prévu pour que le côté actif (côté du projecteur qui est en train de tourner) inhibe le dispositif d'aide de l'autre côté afin qu'un seul dispositif d'aide soit utilisé à la fois.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une vue schématique de dessus d'un véhicule cible et d'un véhicule suiveur équipé d'un dispositif d'aide ACC classique, dans un virage.
Fig.2 est une vue schématique semblable à Fig.1 alors que le véhicule suiveur est équipé d'un dispositif d'aide ACC selon l'invention.
Fig.3 est une vue schématique en plan d'un projecteur lumineux avec dispositif ACC intégré dans un projecteur, le boîtier étant coupé par un plan horizontal.
Fig.4 est une vue schématique en plan d'un projecteur principal et d'un projecteur additionnel intégrant un dispositif ACC.
Fig.5 montre un dispositif ACC disposé dans un boîtier distinct du projecteur principal.
Fig.6 montre une variante de Fig.3.
Fig.7 montre une variante de Fig.5.
Fig.8 montre une variante de Fig.6.
Fig.9, enfin, montre schématiquement en vue de dessus une autre variante de réalisation.

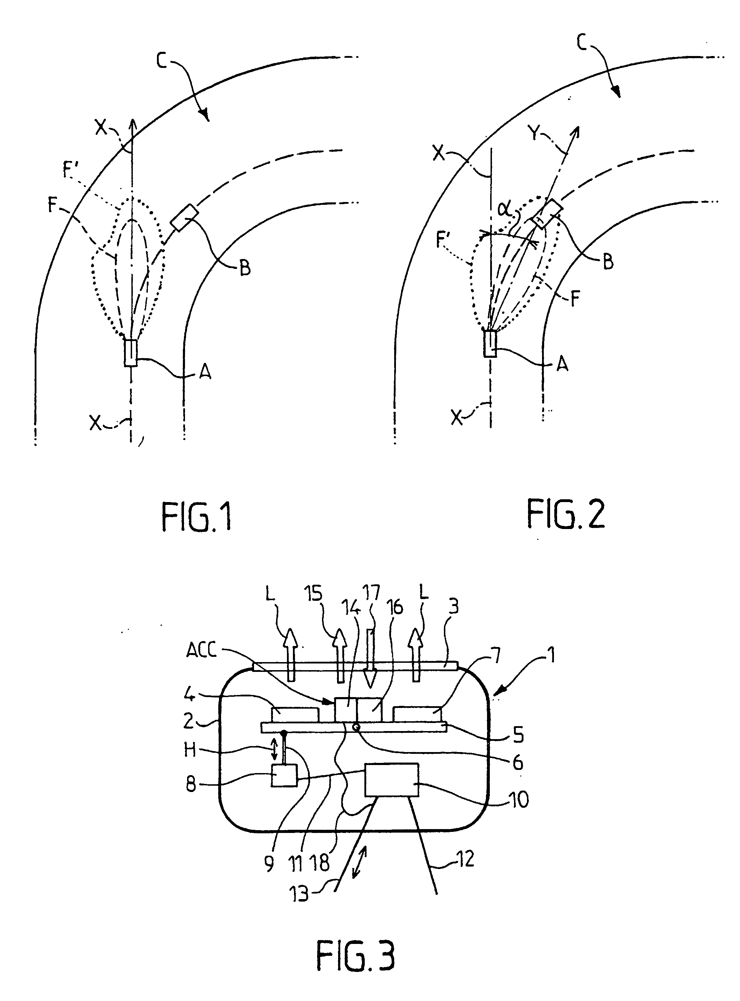

Sur Fig.1, on peut voir un véhicule A équipé d'un dispositif d'aide à la conduite ACC classique dont l'émetteur envoie vers l'avant du véhicule un faisceau F dont l'axe est fixe relativement au véhicule A , parallèle à l'axe longitudinal X-X de ce véhicule . On a représenté par F' le contour du faisceau d'éclairage des codes.

Un véhicule cible est représenté par B. Avant d'entrer dans un virage C, le véhicule B était détecté par le faisceau F du véhicule suiveur A. En prenant son virage, le véhicule cible B sort du faisceau F et le véhicule suiveur A perd la trace du véhicule cible B, avec les conséquences exposées précédemment.

Fig.2 montre le véhicule suiveur A équipé d'un dispositif d'aide à la conduite ACC selon l'invention. L'azimut du faisceau F de l'émetteur, c'est-à-dire l'angle α entre l'axe longitudinal X-X du véhicule A et l'axe Y du faisceau F, est modifié selon la courbure de la route de manière à faire suivre cette courbure par le faisceau. Sur Fig.2, on voit que le faisceau F atteint toujours le véhicule cible B dont la trace n'est pas perdue par le véhicule suiveur A.

Fig.3 est une vue de dessus schématique d'un dispositif d'aide à la conduite ACC intégré dans un projecteur 1 monté à l'avant du véhicule. Le projecteur 1 comprend un boîtier 2 muni, à l'avant, d'une optique 3 transparente. Sur cette figure, comme sur les suivantes, le boîtier est coupé par un plan horizontal pour que les éléments intérieurs soient visibles.

Le projecteur 1 est prévu pour assurer une fonction AFS (Adaptive Frontlighting System / Système Adaptatif d'Eclairage Avant). Il s'agit d'une optimisation de l'éclairage. Dans le cas de Fig. 3 cette optimisation de l'éclairage est obtenue grâce à une fonction BL (Bending Light, ou code virage) selon laquelle un code 4 est monté rotatif en azimut pour éclairer là où la voiture va et non plus seulement devant.

Le code 4 est monté sur une platine 5, elle-même montée rotative autour d'un axe 6 essentiellement vertical, par exemple situé dans le plan médian longitudinal du projecteur ou au voisinage de ce plan. Le code 4 est disposé au voisinage d'un bord de la platine 5 éloigné de l'axe 6. Un projecteur route 7 éventuel peut être installé au voisinage de l'autre bord de la platine 5. Toutefois, le projecteur route peut ne pas être monté solidaire de la platine du code 4 et peut même ne pas exister si le code 4 est un bifonction. Les flèches L symbolisent les faisceaux lumineux émis par le code 4 et le projecteur route 7.

Le montage représenté sur Fig.3 et sur les figures suivantes est simplifié pour illustrer l'invention. En réalité, les projecteurs comportent des axes de rotation et des points d'ancrage plus complexes que ceux montrés sur ces dessins schématiques, mais tout autant compatibles avec la solution de l'invention.

Le mouvement de rotation de la platine 5 autour de l'axe 6 est assuré par un moteur électrique 8 dont le carter est monté fixe relativement au boîtier 2, du côté de la platine 5 opposé à l'optique 3. Le moteur 8 commande (par un système mécanique non représenté) les déplacements d'une tige 9 parallèlement à l'axe longitudinal du véhicule comme indiqué par une double flèche H. L'extrémité de la tige 9 éloignée du moteur 8 est reliée par une articulation à la face arrière de la platine 5, à distance de l'axe 6.

L'amplitude et le sens de la rotation du moteur 8 sont commandés par un calculateur 10, constituant un ensemble de calcul et de commande, relié par un câble 11 au moteur 8. L'ensemble 10 est alimenté en puissance électrique par un câble 12, et reçoit par un câble 13 des informations sur le véhicule à partir de divers capteurs (non représentés). Le câble 13 peut assurer une liaison filaire directe ou multiplexée. L'ensemble 10 peut échanger des informations avec les capteurs comme indiqué par la double flèche le long du câble 13.

Le boîtier de l'ensemble de commande 10 pourra, de manière indifférenciée, se situer à l'intérieur ou à l'extérieur du projecteur 1 en un endoit quelconque du véhicule , et le véhicule pourra en comporter un ou deux ( un pour les deux côtés, ou un par côté).

Le dispositif d'aide à la conduite ACC comprend un émetteur 14 monté sur la platine 5, par exemple dans la région centrale de cette platine. L'émetteur 14, du type radar ou lidar, émet un faisceau vers l'avant schématisé par la flèche 15. Le dispositif ACC comprend un récepteur 16, également monté sur la platine 5. Le récepteur 16 reçoit une partie du faisceau réfléchi par le véhicule cible, comme schématisé par la flèche 17.

La liaison du dispositif ACC à l'ensemble de commande 10 est assurée par un faisceau 18 multifilaire permettant alimentation et échanges d'informations.

Le projecteur 1 de Fig.3 est du type "MBL" (Main Bending Light / code tournant) selon lequel le code 4 tourne autour de l'axe vertical 6, suivant le sens de courbure de la route, afin de bien éclairer le bord incurvé de la route.

Les informations transmises par le câble 13 à l'ensemble 10 pour piloter la fonction BL peuvent être , de manière non limitative :
- l'angle au volant du véhicule ;
- des informations de capteurs gyroscopiques ou de lacet, installés sur le véhicule ;
- la vitesse du véhicule qui permet de détecter une sortie de courbe, le conducteur accélérant généralement avant que le volant ne soit revenu en ligne droite ;
- une détection de la forme de la route par relevé de la forme de la ou des bandes de séparation;
- les informations de navigation, lorsqu'elles existent ; dans ce cas l'ensemble 10 peut disposer, par avance, d'informations sur la portion de route située en avant du véhicule lorsque ce dernier est équipé d'un système de navigation par exemple à guidage par satellite ou GPS

Les trois dernières sources d'information permettent une anticipation de la trajectoire du véhicule et donc de la performance du dispositif d'aide à la conduite, les deux premières sources ne décrivent que la configuration sous le véhicule.

Le fonctionnement du dispositif de Fig.3 est le suivant.

Lorsque le conducteur active le dispositif d'aide ACC, l'ensemble de commande 10 est alimenté et mis en service, même si le véhicule circule en plein jour alors que le code 4 est éteint. Le moteur 8 est commandé par l'ensemble 10 et la platine 5 va tourner autour de l'axe vertical 6 selon les informations reçues sur le profil de la route. Le faisceau F de l'émetteur 14, c'est à dire la flèche 15 qui le repésente schématiquement , sera orienté au mieux en fonction de la courbure de la route, ce qui améliore le suivi du véhicule cible B.

Comme le dispositif ACC est installé sur la platine 5 déjà prévue pour la fonction BL d'optimisation de l'éclairage, l'amélioration du fonctionnement du dispositif ACC ne nécessite pas une motorisation angulaire coûteuse supplémentaire ni une interprétation supplémentaire de données sur le véhicule.

Par ailleurs, l'intégration du dispositif ACC dans le projecteur 1 lui permet de bénéficier de ses protections (lave-projecteur, étanchéité) contre la pluie et la saleté, ce qui est particulièrement important dans le cas d'un dispositif ACC avec lidar dont l'émission et la réception dans le domaine de l'infra-rouge sont particulièrement affectées par une diminution de transparence de l'optique 3.

En outre, les projecteurs sont de plus en plus équipés d'une correction d'assiette, à laquelle correspond une rotation de la platine 5 autour d'un axe horizontal transversal (non représenté). Le dispositif ACC bénéficiera alors de cette correction d'assiette permettant une simplification de la scrutation verticale des cibles.

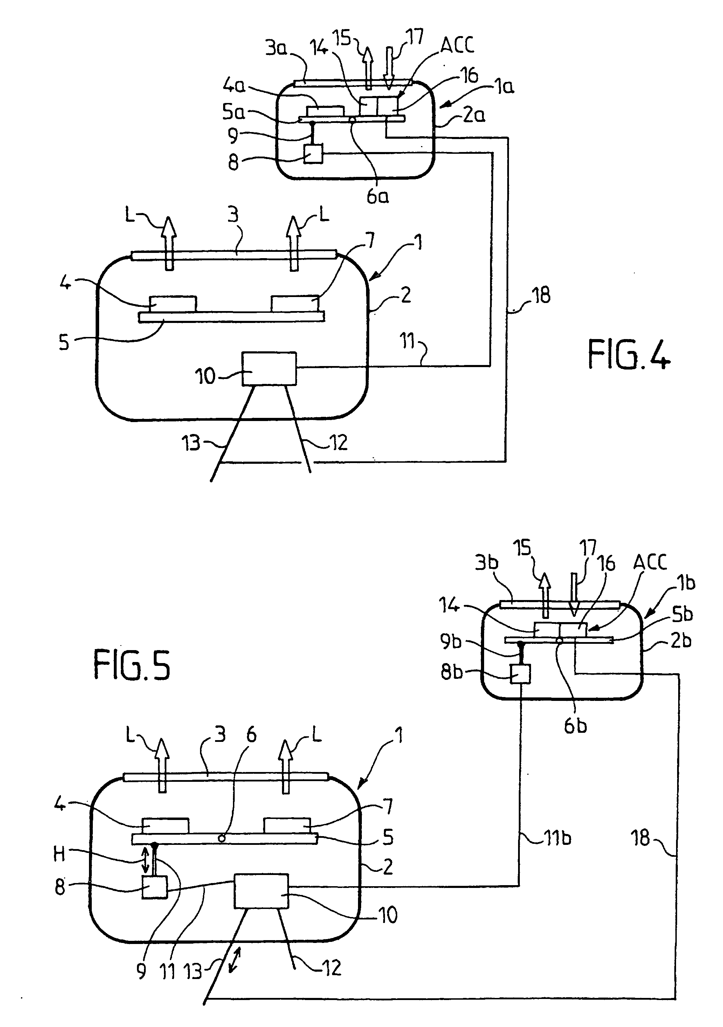

Fig.4 montre une variante de réalisation dans laquelle le dispositif ACC est intégré dans un projecteur 1a de type ABL, c'est-à-dire projecteur tournant additionnel.

Les éléments identiques à des éléments déjà décrits à propos de Fig.3 sont désignés par les mêmes références numériques sans que leur description soit reprise. On notera que dans le projecteur principal 1 la platine 5 (qui porte le code 4 et le projecteur route éventuel 7) est fixe en azimut, c'est-à-dire ne tourne plus dans un plan horizontal relativement au boîtier 2. La correction d'assiette, ou en site, peut être présente.

L'optimisation de l'éclairage est assurée à l'aide du projecteur additionnel la installé dans le bouclier ou pare-chocs du véhicule. Le boîtier 2a du projecteur 1a comporte une platine 5a montée rotative autour d'un axe vertical 6a. Sur l'avant de la platine est installé un projecteur lumineux 4a dont l'azimut est modifié par la rotation de la platine 5a. Cette rotation est commandée par le moteur 8 dont le carter est monté fixe dans le boîtier 2a . Le moteur 8 est relié par le câble 11 à l'ensemble de commande 10 qui se trouve dans le boîtier 2 du projecteur 1. Le dispositif d'aide ACC est fixé sur la platine 5a, en avant, du côté de l'axe 6a opposé au projecteur 4a. Le câble 18 relie l'ensemble émetteur 14 - récepteur 16 du dispositif ACC à l'ensemble de commande 10. Lorsque le dispositif ACC est mis en fonctionnement, l'ensemble 10 commande la rotation de la platine 5a autour de l'axe vertical 6a en fonction des informations sur la courbure de la route. Le dispositif ACC est convenablement orienté pour un meilleur suivi du véhicule cible B. A la lumière du jour, le projecteur 4a reste éteint et la rotation de la platine Sa n'est exploitée que par le dispositif ACC. De nuit, lorsque le projecteur 4a est allumé, la rotation de la platine 5a assure à la fois l'optimisation de l'éclairage et celle du suivi du véhicule cible.

Bien entendu, la disposition de l'ensemble de commande 10 dans le boîtier 2 du projecteur 1 n'est pas limitative. Cet ensemble de commande 10 peut se trouver soit dans le bouclier soit dans le compartiment moteur ou en tout autre endroit avantageux du véhicule. Le projecteur additionnel 1a peut aussi comporter des antibrouillards.

Si le dispositif ACC est unique et n'est prévu que d'un côté du véhicule, le style ou aspect extérieur du véhicule peut être homogénéisé en installant dans le projecteur additionnel situé de l'autre côté du véhicule un élément inerte de même apparence que le dispositif ACC .

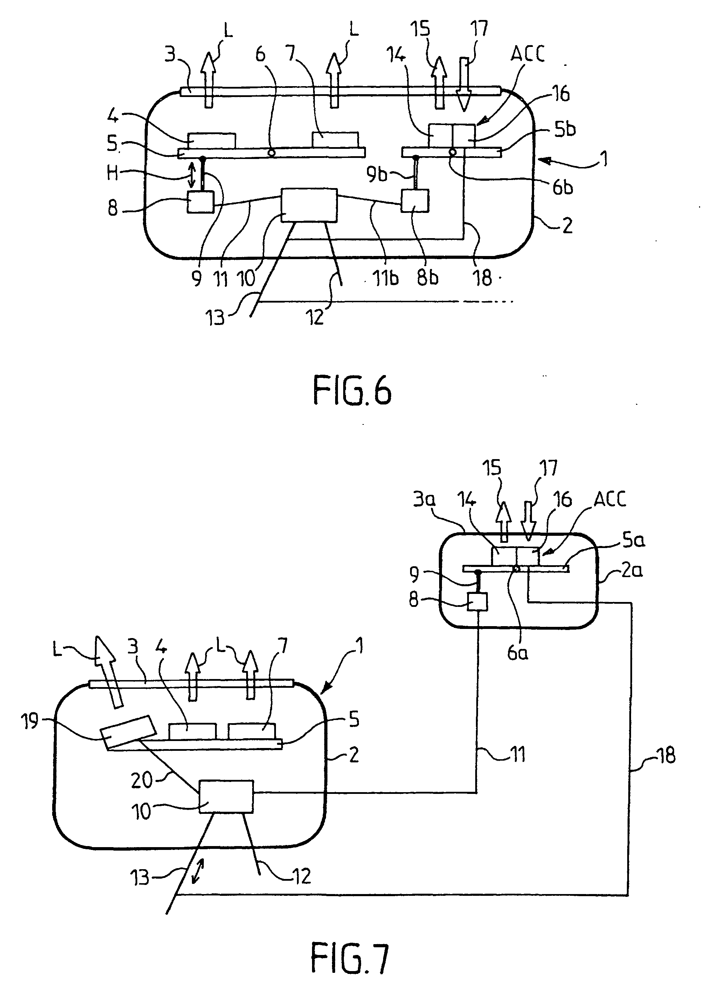

Fig.5 montre une variante de réalisation selon laquelle le dispositif ACC est désolidarisé mécaniquement du projecteur 1 de type MBL de Fig.3, dont les éléments identiques sont désignés par les mêmes références numériques.

L'émetteur 14 et le récepteur 16 du dispositif ACC sont fixés à l'avant d'une platine 5b montée rotative autour d'un axe vertical 6b dans un boîtier 2b spécifique au dispositif ACC. Le boîtier 2b est disposé, par exemple, au milieu à l'avant du véhicule, devant le radiateur. Un moteur 8b, dont le carter est fixe par rapport au boîtier 2b, est placé en arrière de la platine 5b, sur un côté de celle-ci. Le moteur 8b commande le déplacement rectiligne d'une tige 9b sensiblement perpendiculaire à la platine 5b. Une extrémité de la tige 9b est articulée à la platine. Le déplacement de la tige 9b provoque la rotation de la platine 5b autour de l'axe 6b. La face avant du boîtier 2b est constituée par une paroi 3b transparente au rayonnement de l'émetteur 14. La commande du moteur 8b est assurée par l'ensemble 10 relié à ce moteur par un câble 11b.

L'azimut de la platine 5b de l'émetteur 14 peut ainsi être modifié ou bien suivant les mêmes consignes d'angle que pour la platine 5 du projecteur 1, ou bien proportionnellement à celles-ci.

Fig.6 montre une variante de réalisation qui ne diffère de celle de Fig.5 que par l'installation du dispositif ACC dans le même boîtier 1, agrandi, que le projecteur principal tournant. Mais le dispositif ACC reste installé sur une platine 5b rotative différente de la platine 5 du projecteur tournant. Les mêmes références numériques sont utilisées pour désigner des éléments identiques à ceux de Fig.5.

Fig.7 montre une variante de réalisation selon laquelle chaque projecteur lumineux 1 du véhicule est équipé d'un projecteur d'éclairage de virage fixe 19 ( désigné par le sigle FBL ), pré-tourné vers l'extérieur. Selon le schéma de Fig.7 le projecteur 1 est celui situé sur la gauche du véhicule, le projecteur 19 étant pré-tourné vers la gauche. L'alimentation électrique du projecteur 19 est assurée par un câble 20 relié à l'ensemble de commande 10. La gradation ou l'intensité lumineuse du projecteur 19 est ajustée en fonction des paramètres de la route et du véhicule, recueillis par l'ensemble 10. L'azimut de la platine 5 n'est pas modifié en fonction de ces paramètres.

Le dispositif ACC avec son émetteur 14 et son récepteur 17 est monté, comme sur Fig.4, dans un boîtier séparé 2a, sur une platine rotative 5a dont l'orientation autour de l'axe vertical 6a est commandée par l'ensemble 10 en fonction des paramètres de la route et du véhicule.

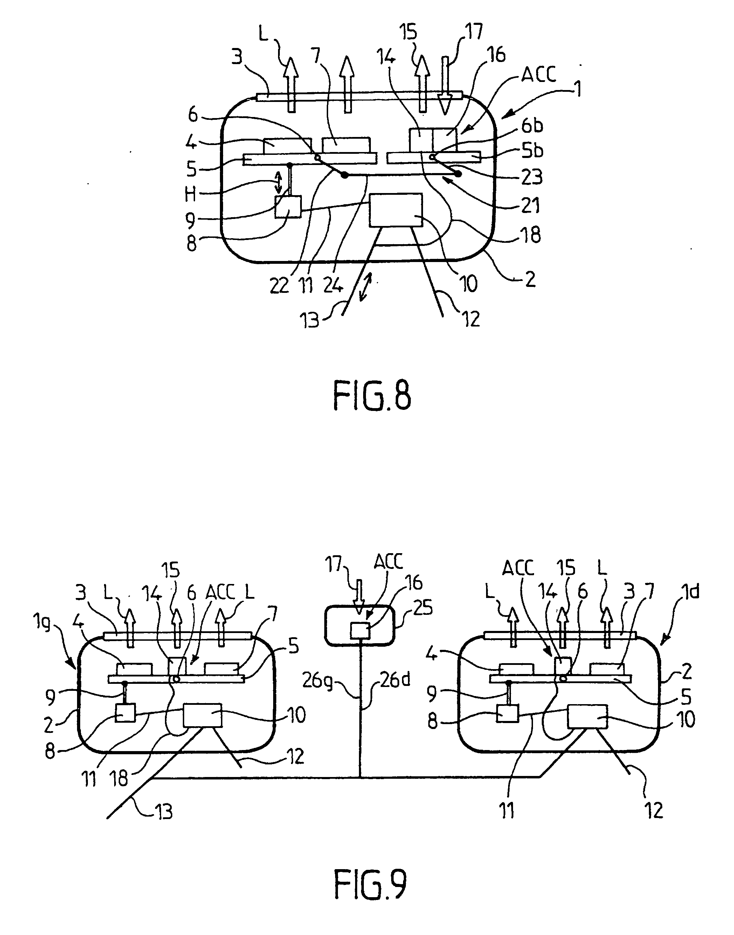

Fig.8 montre une variante de réalisation du dispositif de Fig.6, les éléments semblables étant désignés par les mêmes références numériques.

Deux platines différentes 5, 5b sont prévues pour supporter respectivement les projecteurs lumineux 4, 7, et l' ensemble émetteur 14 - récepteur 16 du dispositif ACC. Les platines 5, 5b, sont montées rotatives autour d'axes verticaux respectifs 6, 6b.

L'entraînement en rotation de la platine 5b autour de l'axe 6b est assuré par un mécanisme 21 de transmission du mouvement de rotation de la platine 5. Le mécanisme 21 schématisé sur Fig.8 est du type à parallélogramme déformable comportant deux biellettes 22, 23 parallèles, calées en rotation respectivement sur les platines 5, 5b et une tringle de liaison 24 articulée à chaque extrémité des biellettes 22, 23 éloignée des axes 6, 6b. Tout autre mécanisme de transmission permettant d'assurer une rotation de la platine 5b identique ou proportionnelle à celle de la platine 5 conviendra.

Le dispositif ACC suivra le contour de la route de la même manière que les projecteurs 4, 7 installés sur la platine 5 mobile assurant la fonction BL.

Fig.9 montre une variante de réalisation suivant laquelle le récepteur 16 du dispositif d'aide ACC est fixe par rapport au châssis du véhicule et disposé, par exemple, dans un boîtier 25 situé à l'avant, au milieu du véhicule. L'émetteur 14 est monté rotatif autour d'un axe vertical de manière à suivre la courbure de la route. Selon la variante de Fig.9, l'émetteur 14 est monté sur la platine 5 d'un projecteur de type MBL, tel que celui montré de Fig.3. La platine 5 porte le code 4 et le projecteur route éventuel 7. On retrouve le moteur 8 commandant la rotation de la platine 5.

Si le système d'optimisation de l'éclairage commande la rotation dans le plan horizontal des projecteurs aussi bien vers l'intérieur du virage que vers l'extérieur, un seul émetteur 14 pour le dispositif d'aide ACC est nécessaire. Il peut être monté indifféremment sur la platine 5 du projecteur droite 1d ou du projecteur gauche 1g. Cette considération est valable pour tous les cas de figure déclinés.

Si le système d'optimisation de l'éclairage est prévu pour faire tourner seulement le projecteur situé à l'intérieur du virage, on prévoit alors, pour le dispositif d'aide ACC, un émetteur 14 sur chaque platine 5 des projecteurs droite 1d et gauche 1g.

Le récepteur 16 est relié par deux câbles 26d, 26g respectivement aux ensembles de commande 10 du projecteur gauche et du projecteur droit.

Le fonctionnement est le même que celui expliqué précédemment, l'émetteur 14 étant orienté suivant la courbure de la route.

Un autre cas de figure possible est celui où chacun des projecteurs peut tourner vers l'extérieur pour assurer une fonction BL et est équipé d'un dispositif d'aide ACC . Les Figs. 3 à 8 représentent alors le côté droit comme le côté gauche. L'ensemble est prévu pour que le côté actif (côté du projecteur qui est en train de tourner) inhibe le dispositif ACC de l'autre côté, car un seul dispositif ACC est utilisé à la fois. Il faut alors relier les fils d'information comme sur Fig.9.

Quelle que soit la variante, l'invention permet, en interposant dans le dispositif d'aide ACC un mécanisme rotatif, de défléchir le faisceau émis, radar ou lidar, en fonction des informations sur la courbure de la route, et d'améliorer le suivi du véhicule cible B.

Le montage rotatif du dispositif ACC peut être prévu même si le véhicule n'est pas équipé d'un système d'optimisation de l'éclairage prenant en compte la courbure de la route.

## Revendications

1. Dispositif d'aide à la conduite pour véhicule automobile, comprenant au moins un émetteur (14) de rayonnement vers l'avant du véhicule, au moins un récepteur (16) d'une partie de ce rayonnement réfléchi par un véhicule cible (B), et des moyens de calcul et de commande (10) pour agir sur l'accélération et le freinage du véhicule suiveur (A) selon les informations provenant de l'ensemble émetteur (14) - récepteur (16) et selon des données propres au véhicule suiveur, **caractérisé par le fait qu'**au moins l'émetteur (14) est monté rotatif en azimut et que des moyens d'entraînement en rotation (8,9; 8b,9b) de l'émetteur (14) sont prévus pour modifier l'azimut (α) du faisceau (F) de l'émetteur selon la courbure de la route à partir des informations recueillies par un ensemble de commande (10) d'un système d'optimisation de l'éclairage équipant le véhicule suiveur et comportant des moyens propres à fournir des informations sur la courbure de la route.

2. Dispositif selon la revendication 1, **caractérisé par le fait que** le récepteur (16) est monté rotatif avec l'émetteur (14).

3. Dispositif selon l'une des revendications précédentes, **caractérisé par le fait qu'**il est intégré dans un projecteur lumineux (1, 1a, 1d, 1g).

4. Dispositif selon la revendication 3, associé à un projecteur lumineux (1,1a, 1d, 1g) comprenant un projecteur rotatif (4, 4a) monté sur une platine (5, 5a) rotative en azimut autour d'un axe (6,6a) essentiellement vertical pour assurer une optimisation de l'éclairage, **caractérisé par le fait que** le dispositif d'aide à la conduite (ACC) comprend un émetteur (14) monté sur la même platine rotative (5,5a) que le projecteur (4, 4a).

5. Dispositif selon la revendication 4, **caractérisé par le fait que** le projecteur rotatif (4a) est un projecteur additionnel, en particulier installé dans le bouclier du véhicule, et qu'au moins l'émetteur (14) du dispositif d'aide (ACC) est monté sur la platine rotative (5a) du projecteur additionnel (4a).

6. Dispositif selon la revendication 1, associé à un projecteur lumineux (4) monté sur une platine (5) rotative en azimut autour d'un axe (6) essentiellement vertical pour assurer une optimisation de l'éclairage, **caractérisé par le fait que** l'émetteur (14) est monté sur une platine auxiliaire différente (5b) rotative en azimut autour d'un axe vertical (6b), la commande en rotation de cette platine étant assurée par l'ensemble de commande (10) de la platine (5) du projecteur (4).

7. Dispositif selon la revendication 6, **caractérisé par le fait que** la platine auxiliaire (5b) est disposée dans le même boîtier (2) que la platine (5) du projecteur (4).

8. Dispositif selon la revendication 7, **caractérisé par le fait qu'**il comprend un mécanisme de transmission (21) de la rotation de la platine (5) du projecteur (4) à la platine auxiliaire (5b).

9. Dispositif selon la revendication 6, **caractérisé par le fait que** la platine auxiliaire (5b) est disposée dans un boîtier (2b) différent de celui (2) abritant la platine (5) du projecteur (4).

10. Dispositif selon la revendication 6 ou 9, **caractérisé par le fait qu'**un dispositif d'entraînement en rotation (8b,9b) de la platine auxiliaire (5b) est commandé par l'ensemble de commande (10) de la platine (5) du projecteur (4).

11. Dispositif selon la revendication 3, associé à un projecteur comprenant un projecteur additionnel fixe pré-tourné (19) dont l'intensité lumineuse est commandée par un ensemble (10) selon la courbure de la route, **caractérisé par le fait que** l'émetteur (14) est monté sur une platine auxiliaire (5a) rotative en azimut autour d'un axe vertical (6a), le dispositif d'entraînement en rotation (8,9) de cette platine étant commandé par l'ensemble de commande (10) de l'intensité lumineuse du projecteur additionnel (19).

12. Dispositif selon l'une des revendications 4 à 11, **caractérisé par le fait que** le récepteur (16) est monté sur la même platine rotative (5,5a, 5b) que l'émetteur (14).

13. Dispositif selon la revendication 4, **caractérisé par le fait que** le récepteur (16) est monté fixe dans un boîtier (25) situé à l'avant du véhicule, de préférence dans la région médiane.

14. Dispositif selon la revendication 13, **caractérisé par le fait qu'**un émetteur (14) est monté dans chaque projecteur droite et gauche (1d, 1g) sur la platine rotative (5) correspondante.

15. Dispositif selon la revendication 4, pour véhicule équipé d'un système d'optimisation de l'éclairage commandant la rotation dans le plan horizontal des projecteurs aussi bien vers l'intérieur d'un virage que vers l'extérieur, **caractérisé par le fait qu'**un seul émetteur (14) est prévu pour le dispositif d'aide (ACC) , cet émetteur (14) étant monté indifféremment sur la platine du projecteur droite ou du projecteur gauche .

16. Dispositif selon la revendication 4, pour véhicule équipé d'un système d'optimisation de l'éclairage dans lequel chacun des projecteurs peut tourner vers l'extérieur pour assurer une fonction BL , **caractérisé par le fait que** chacun des projecteurs est équipé d'un dispositif d'aide (ACC) et que l'ensemble est prévu pour que le côté actif (côté du projecteur qui est en train de tourner) inhibe le dispositif d'aide (ACC) de l'autre côté afin qu'un seul dispositif d'aide (ACC) soit utilisé à la fois.

## Patentansprüche

1. Fahrerassistenz-Vorrichtung für Kraftfahrzeuge, mit wenigstens einem Sender (14) zum Aussenden von Strahlen nach vorne bezüglich des Fahrzeugs, wenigstens einem Empfänger (16) zum Empfangen eines Teils der von einem Zielfahrzeug (B) reflektierten Strahlen und Berechnungs- und Steuermittel (10), um das Beschleunigen und Bremsen des nachfolgenden Fahrzeugs (A) gemäß den Daten, die von der aus Sender (14) und Empfänger (16) bestehenden Einheit stammen, und gemäß dem nachfolgenden Fahrzeug eigenen Merkmalen zu beeinflussen,
**dadurch gekennzeichnet, dass** wenigstens der Sender (14) azimutal drehbar angebracht ist, und dass Mittel (8, 9; 8b, 9b) zum Drehen des Senders (14) vorgesehen sind, um den Azimutwinkel (α) des Strahlbündels (F) des Senders entsprechend der Straßenbiegung anhand der Angaben zu verändern, die durch eine Einheit (10) zum Steuern eines Systems zur Beleuchtungsoptimierung erfasst werden, mit dem das nachfolgende Fahrzeug ausgestattet ist und das Mittel umfasst, die geeignet sind, Angaben hinsichtlich der Straßenbiegung zu liefern.

2. Vorrichtung nach Anspruch 1,
**dadurch gekennzeichnet, dass** der Empfänger (16) mit dem Sender (14) zusammen drehbar montiert ist.

3. Vorrichtung nach einem der vorhergehenden Ansprüche,
**dadurch gekennzeichnet, dass** sie in einem Scheinwerfer (1, 1a, 1d, 1g) integriert ist.

4. Vorrichtung nach Anspruch 3, die einem Scheinwerfer (1, 1a, 1d, 1g) zugehörig ist, der einen drehbaren Scheinwerfer (4, 4a) umfasst, der auf einer Platte (5, 5a) montiert ist, welche um eine im Wesentlichen vertikale Achse (6, 6a) azimutal drehbar ist, um eine Optimierung der Beleuchtung zu gewährleisten,
**dadurch gekennzeichnet, dass** die Fahrerassistenz-Vorrichtung (ACC) einen Sender (14) umfasst, der auf derselben drehbaren Platte (5, 5a) wie der Scheinwerfer (4, 4a) montiert ist.

5. Vorrichtung nach Anspruch 4,
**dadurch gekennzeichnet, dass** der drehbare Scheinwerfer (4a) ein Zusatzscheinwerfer ist, der insbesondere in der Frontschürze des Fahrzeugs eingebaut ist, und dass wenigstens der Sender (14) der Assistenz-Vorrichtung (ACC) auf der drehbaren Platte (5a) des Zusatzscheinwerfers (4a) montiert ist.

6. Vorrichtung nach Anspruch 1, die einem Scheinwerfer (4) zugehörig ist, der auf einer Platte (5) montiert ist, welche um eine im Wesentlichen vertikale Achse (6) azimutal drehbar ist, um eine Optimierung der Beleuchtung zu gewährleisten,
**dadurch gekennzeichnet, dass** der Sender (14) auf einer anderen zusätzlichen Platte (5b) montiert ist, welche um eine vertikale Achse (6b) azimutal drehbar ist, wobei die Steuerung der Drehung der Platte durch die Steuereinheit (10) der Platte (5) des Scheinwerfers (4) gewährleistet wird.

7. Vorrichtung nach Anspruch 6,
**dadurch gekennzeichnet, dass** die zusätzliche Platte (5b) in demselben Gehäuse (2) wie die Platte (5) des Scheinwerfers (4) angeordnet ist.

8. Vorrichtung nach Anspruch 7,
**dadurch gekennzeichnet, dass** sie einen Mechanismus (21) zum Übertragen der Drehung der Platte (5) des Scheinwerfers (4) auf die zusätzliche Platte (5b) umfasst.

9. Vorrichtung nach Anspruch 6,
**dadurch gekennzeichnet, dass** die zusätzliche Platte (5b) in einem anderen Gehäuse (2b) angeordnet ist als dem (2), in dem die Platte (5) des Scheinwerfers (4) untergebracht ist.

10. Vorrichtung nach Anspruch 6 oder 9,
**dadurch gekennzeichnet, dass** eine Vorrichtung (8b, 9b) zum Drehen der zusätzlichen Platte (5b) durch die Steuereinheit (10) der Platte (5) des Scheinwerfers (4) gesteuert wird.

11. Vorrichtung nach Anspruch 3, die einem Scheinwerfer zugehörig ist, der einen feststehenden, bereits geschwenkten Zusatzscheinwerfer (19) umfasst, dessen Helligkeit durch eine Einheit (10) entsprechend der Straßenbiegung gesteuert wird,
**dadurch gekennzeichnet, dass** der Sender (14) auf einer um eine vertikale Achse (6a) azimutal drehbaren zusätzlichen Platte (5a) montiert ist, wobei die Vorrichtung (8, 9) zum Drehen der Platte durch die Einheit (10) zum Steuern der Helligkeit des Zusatzscheinwerfers (19) gesteuert wird.

12. Vorrichtung nach einem der Ansprüche 4 bis 11,
**dadurch gekennzeichnet, dass** der Empfänger (16) auf derselben drehbaren Platte (5, 5a, 5b) montiert ist wie der Sender (14).

13. Vorrichtung nach Anspruch 4,
**dadurch gekennzeichnet, dass** der Empfänger (16) feststehend in einem Gehäuse (25) montiert ist, das an der Frontseite des Fahrzeugs vorzugsweise im mittleren Bereich angeordnet ist.

14. Vorrichtung nach Anspruch 13,
**dadurch gekennzeichnet, dass** in jedem rechten und linken Scheinwerfer (1d, 1g) ein Sender (14) auf der entsprechenden drehbaren Platte (5) montiert ist.

15. Vorrichtung nach Anspruch 4, für Fahrzeuge, die mit einem System zur Beleuchtungsoptimierung ausgestattet sind, welches die Drehung der Scheinwerfer in einer Kurve sowohl nach innen als auch nach außen steuert,
**dadurch gekennzeichnet, dass** ein einziger Sender (14) für die Assistenz-Vorrichtung (ACC) vorgesehen ist, wobei der Sender (14) unterschiedslos auf der Platte des rechten oder des linken Scheinwerfers montiert ist.

16. Vorrichtung nach Anspruch 4, für Fahrzeuge, die mit einem System zur Beleuchtungsoptimierung ausgestattet sind, bei dem jeder Scheinwerfer nach außen schwenken kann, um ein Kurvenlicht zu gewährleisten,
**dadurch gekennzeichnet, dass** jeder Scheinwerfer mit einer Assistenz-Vorrichtung (ACC) ausgestattet ist, und dass das Ganze so vorgesehen ist, dass die aktive Seite (Seite des Scheinwerfers, die geschwenkt wird) die Assistenz-Vorrichtung (ACC) der anderen Seite blockiert, damit nur eine einzige Assistenz-Vorrichtung (ACC) auf einmal verwendet wird.

## Claims

1. Driving apparatus for a motor vehicle, comprising at least one emitter (14) for emitting radiation forward from the vehicle, at least one receiver (16) for receiving a part of the said radiation reflected by a target vehicle (B), and computing and control means (10) for acting on the acceleration and the braking of the following vehicle (A) in response to information derived from the set consisting of the emitter (14) and receiver (16), and in accordance with the characteristic data of the following vehicle, **characterised by** the fact that at least the emitter (14) is rotatable in azimuth, and by the fact that the means for driving the emitter (14) in rotation (8, 9; 8b, 9b) are arranged to modify the azimuth (α) of the beam (F) of the emitter in accordance with the curvature of the road and in response to information gathered by a control system (10), with which the following vehicle is equipped, for optimising the illumination produced and comprising means for supplying information as to the curvature of the road.

2. Apparatus according to Claim 1, **characterised by** the fact that the receiver (16) is mounted for rotation with the emitter (14).

3. Apparatus according to Claim 1 or Claim 2, **characterised by** the fact that it is integrated in a headlight (1, 1a, 1d, 1g).

4. Apparatus according to Claim 3, associated with a headlight (1, 1a, 1d, 1g), comprising a rotating headlight (4, 4a) mounted on a base plate (5, 5a) for rotation in azimuth about an essentially vertical axis (6, 6a), in order to ensure optimisation of the illumination given, **characterised by** the fact that the driving aid apparatus (ACC) comprises an emitter (14) mounted on the same rotatable base plate (5, 5a) as the headlight (4, 4a).

5. Apparatus according to Claim 4, **characterised by** the fact that the rotatable headlight (4a) is an additional headlight, in particular one which is installed within the envelope of the vehicle, and by the fact that at least one emitter (14) of the aid apparatus (ACC) is mounted on the rotatable base plate (5a) of the additional headlight (4a).

6. Apparatus according to Claim 1, associated with a headlight (4) mounted on a base plate (5), which is rotatable in azimuth about an essentially vertical axis (6) to ensure optimisation of the illumination produced, **characterised by** the fact that the emitter (14) is mounted on a different, auxiliary, base plate (5b) which is rotatable in azimuth about a vertical axis (6b), control of the rotation of the said base plate being ensured by the control unit (10) for the base plate (5) of the headlight (4).

7. Apparatus according to Claim 6, **characterised by** the fact that the auxiliary base plate (5b) is disposed in the same housing (2) as the base plate (5) of the headlight (4).

8. Apparatus according to Claim 7, **characterised by** the fact that it includes a mechanism (21) for transmission of the rotation of the base plate (5) of the headlight (4) to the auxiliary base plate (5b).

9. Apparatus according to Claim 6, **characterised by** the fact that the auxiliary base plate (5b) is disposed in a different housing (2b) from the housing (2) in which the base plate (5) of the headlight (4) is contained.

10. Apparatus according to Claim 6 or Claim 9,
**characterised by** the fact that a device (8b, 9b) for driving the auxiliary base plate (5b) in rotation is controlled by the control unit (10) for the base plate (5) of the headlight (4).

11. Apparatus according to Claim 3, associated with a headlight comprising an additional, fixed, pre-turned, headlight (19), the light intensity of which is controlled by a unit (10) in accordance with the curvature of the road, **characterised by** the fact that the emitter (14) is mounted on an auxiliary base plate (5a) which is rotatable in azimuth about a vertical axis (6a), the device (8, 9) for driving the said base plate in rotation being controlled by the control unit (10) for the light intensity of the additional headlight (19).

12. Apparatus according to one of Claims 4 to 11, **characterised by** the fact that the receiver (16) is mounted on the same rotatable base plate (5, 5a, 5b) as the emitter (14).

13. Apparatus according to Claim 4, **characterised by** the fact that the receiver (16) is fixed in a housing (25) situated at the front of the vehicle, preferably in its middle region.

14. Apparatus according to Claim 13, **characterised by** the fact that there is an emitter (14) mounted in each of the left hand and right hand headlights (1d, 1g), on the corresponding rotatable base plate (5).

15. Apparatus according to Claim 4, for a vehicle equipped with a system for optimising the illumination produced, controlling the rotation of the headlights in the horizontal plane, both towards the inside of a bend and towards the outside, **characterised by** the fact that a single emitter (14) is provided for the driving aid apparatus (ACC), the said emitter (14) being mounted on the base plate of either one of the right hand and left hand headlights.

16. Apparatus according to Claim 4 for a vehicle equipped with a system for optimising the lighting produced, in which each of the headlights is able to turn outwards in order to ensure a bend light (BL) function, **characterised by** the fact that each of the headlights is equipped with an aid apparatus (ACC), and by the fact that the apparatus is arranged in such a way that the active side (that is to say the side on which the headlight in process of turning is situated) inhibits the aid apparatus (ACC) on the other side, so that only one aid apparatus (ACC) is in use at a time.
